# EUROPEAN PATENT APPLICATION

(11) **EP 1 939 364 A1**
(43) Date of publication of application: **02.07.2008**
(21) Application number: 06820002.1
(22) Date of filing: 28.09.2006
(51) Int. Cl.: E03B 3/28

(54) **DEVICE FOR GENERATING WATER BY CONDENSATION OF AMBIENT MOISTURE**

(30) Priority: 13.10.2005 ES 200502498
(71) Applicant: Valle Ocon, Jose, 29649 Mijas Costa Málaga (ES)
(72) Inventor: Valle Ocon, Jose, 29649 Mijas Costa Málaga (ES)
(74) Representative: PROPI, S.L.
(86) International application number: PCT/ES2006/000541
(87) International publication number: WO 2007/042582

(57) **Abstract**

The invention relates to a device for generating water by condensation of the ambient moisture contained in the ambient air surrounding a thermally insulated sealed case housing a means for maintaining a low temperature. The invention also comprises a coil means which is divided into numerous segments, of which some pass through the interior of the sealed case and others extend externally around all sides thereof, such as to form a closed circuit with a receptacle containing an anti-freeze heat-transfer liquid. The invention further comprises a pulse pump which is disposed in the circuit, a cooler which cools the interior of the sealed case when the internal temperature rises and a turbine for driving air into the case. The assembly is enclosed in an external casing and is equipped with a tray for collecting the condensed water.

## Description

### OBJECT OF THE INVENTION

The present invention relates to a device for generating water by condensation of ambient moisture, which adds essential novelty characteristics and considerable advantages with respect to other means known and used to the same end in the current state of the art.

More specifically, the invention proposes the development of a circuit which, when operating in closed circuit, allows using the moisture present in the environment to condensate it and collect it as liquid water in a container from where it can be used for various purposes. The device uses the temperature difference resulting from the thermal gradient between a liquid that runs at a low temperature inside a closed circuit provided by a coil with a predetermined path, driven by a pump, and the surrounding environment, to cause the condensation of the water vapour present in the air and precipitate it towards the place of recovery.

The field of application of the invention is in the industrial sector of the design and manufacture of devices operating in closed circuit, with specific application to condensation of ambient moisture, designing fountains that use the water in a closed circuit and other similar installations.

### BACKGROUND AND SUMMARY OF THE INVENTION

It is well known that any environment contains a certain amount of moisture in the air that depends on factors such as geographical location or the time of the year. Ambient moisture simply consists of water vapour generated by water present in the surface of the Earth, so that potentially it can be used for any purpose provided means are available for collecting it.

The applicant is not aware of the existence of other devices designed to condensate the ambient moisture in order to make direct and immediate use of the water obtained, whether on a household or industrial level.

For this reason, at times when water is scarce for various reasons, or in arid areas where water supply is generally low, it would be particularly advantageous to have a device that allows obtaining water by condensation of ambient moisture, and thereby satisfy basic needs that are often hard to meet.

The main object of the present invention is to develop a device that can help to provide effective solutions to water scarcity or water supply by condensation of ambient moisture wherever it is needed. This objective has been fully reached by the device described below, the main characteristics of which are discussed in the characterising part of claim 1 below.

In essence, the device of the invention comprises means to make run in a closed circuit a liquid at a low temperature, specifically an anti-freeze liquid, along a path determined by a coil with segments housed inside a hermetically sealed case that is thermally insulated from the external environment, with pre-determined dimensions, and other coil segments located outside this case, in the surrounding space delimited by the general case of the device. In this space the heat exchange takes place, leading to condensation of ambient moisture, and air is introduced from the outside to renew the ambient environment and provide new moisture loads. This air may be introduced at ambient temperature or a somewhat higher temperature. The temperature inside the hermetically sealed case is maintained at low values (generally values under zero degrees) with the aid of a considerably large mass of ice enclosed in a mesh and formed from the moisture of the air introduced in the case, thereby cooling the liquid that runs inside the corresponding coil segments inside the case.

### BRIEF DESCRIPTION OF THE DRAWINGS

These and other characteristics and advantages of the invention will be made clearer in view of the detailed description given below of a preferred embodiment, provided by way of an illustrative and non-limiting example only, as well as the accompanying drawings in which:

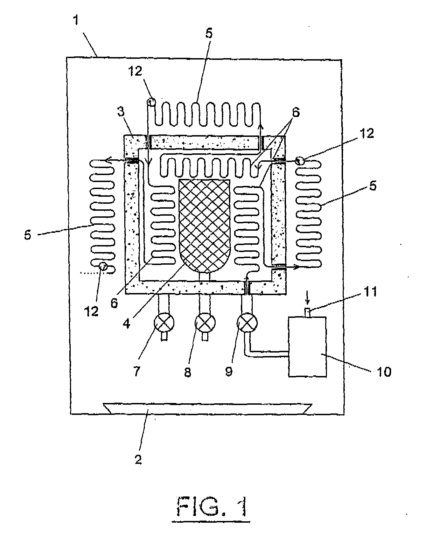

Figure 1 shows a schematic view of an example of embodiment of a water condensation device designed and built according to the teachings of the present invention.

### DESCRIPTION OF A PREFERRED EMBODIMENT

As stated above, the detailed description of the preferred embodiment of the object taught by the invention will be carried out with reference to the schematic representation shown in the only Figure of the drawings. The various component parts or elements of the device have been identified by numerical references. In this sense, it can be seen that the device is constructed in general inside an outer casing 1, essentially closed but provided with one or more orifices to allow air circulation with the external environment. The casing 1 is provided on its bottom base with a formation 2 by way of a receptacle for collecting and recovering the condensed water.

The operative parts of the device consist of a closed and sealed inner case with predetermined dimensions, insulated from its surroundings, the walls of which incorporate a filler of an appropriately thermal insulation material, in order to maintain the value of the low temperature existing inside the case and prevent thermal exchange between the interior space of the case and the surrounding atmosphere. In addition to the aforementioned internal closed case a coil is disposed consisting of several segments joined to one another to form a single circuit inside which runs a cooled fluid. This coil includes segments 6 placed in different directions inside the sealed closed case and other segments 5 placed outside the case, next to each of its walls, surrounding it completely. That is, there are segments 5 placed on both sides, on the top, on the bottom, on the front and on the rear of the case. In any case, the coil starts from a container 10 holding an anti-freeze heat-carrying liquid and returns to an inlet 11 of the same container, thereby establishing a closed circuit, in which a drive pump 9 is interposed meant to make the fluid run along the entire circuit. In addition, the invention foresees the coil to have several temperature gauges such as thermometers 12 placed in several locations to allow knowing the temperature of the liquid circulating at several points of the coil.

As stated above, the temperature inside the sealed case is maintained around a predetermined low value with the aid of a cooling element 4, preferably consisting of an ice block with a predetermined mass formed inside a metal mesh that holds it in place. This cooling block is obtained from the moisture of the air inside the insulated box, for which purpose the device contains a turbine 8 to drive in air at ambient or slightly higher temperature, in order to renew the atmosphere and maintain the supply capacity of an amount of air from which sufficient moisture can be extracted to maintain the ice mass. It will be understood that, as internal losses are very small, the turbine 8 will operate only occasionally, infrequently, which constitutes an essential characteristic of the invention, as the accumulation of energy in the interior allows a minimal external power consumption.

In addition, the internal hermetically sealed case is associated to an external cooling device powered by a motor 7, so that if an undesired rise in the internal temperature is detected said cooling device will automatically turn on, thereby ensuring that the ideal internal conditions for operating the assembly are maintained. Once again, it will be understood that the cooling device will operate only occasionally and infrequently, as the heat losses due to thermal exchange between the inside of the case and the internal coil segments 6 is very small.

Having described the various elements that form part of the device of the invention, it will be understood that the assembly corresponds to a simplified conception with an intuitive and easy to understand operation for an expert in the field.

Thus, with the cooling element 4 already obtained and formed inside the insulated sealed case, the pump 9 will drive the antifreeze liquid obtained from the container 10 and make it run inside the various coil segments 5, 6, respectively external and internal. As the liquid passes though the internal coil segments 6, it is cooled and reaches the external coil segments 5, where it comes in contact with the ambient air surrounding the sealed case, condensing the ambient moisture and precipitating the water obtained towards the container 2 or collection and recovery receptacle. The control exerted over the operation of the installation determines that the cold-generation means 7 and the means 8 for driving air into the internal sealed case will be activated to maintain the working conditions within the established margins. The thermometers 12 control the temperature of the liquid that runs inside the coil and provide additional information that is very useful for maintaining and conserving said working conditions.

It can be understood that there are many and varied possible applications for the device proposed by the invention. However, in addition to simply obtaining ambient water when necessary or to complement water obtained from other supply sources, there is a typical application that is specifically advantageous and with which should be specifically mentioned. This is the construction of fountains in which water runs in a closed circuit, without losses and without the need to supply water from any external source. As an additional characteristic, the invention can be applied to decorative fountains made with transparent materials in which the water may also be dyed with a colorant In order to increase its appeal and the visual effect of the assembly on an observer.

Similarly, it can be seen that the assembly can be controlled manually, semiautomatically or by means allowing an appropriate computerised management.

It is not considered necessary to extend the contents of the present description for an expert in the field to understand its scope and reproduce the embodiment.

Notwithstanding the above, and as the invention has been described only by way of example and based on an example of a preferred embodiment, it shall be understood that within its essence many variations of detail can be included, also protected, which may specifically include the shape, size and/or materials used to manufacture the assembly or its parts, without this representing any change in the essence of the invention.

## Claims

1. Device for generating water by condensation of ambient moisture, specifically the moisture contained in the air inside a space delimited by the outer casing (1) of the device, for its collection and recovery in a receptacle (2) placed on the bottom base of said casing, **characterised in that** it also comprises:
- an inner case, suitably sized, hermetically sealed and insulated by disposing on all of its walls and bases a filler (3) of thermally insulating material;
- a cooling element (4) placed inside said inner hermetically sealed case, basically consisting of a mass of ice enclosed inside a metallic mesh, meant to keep the temperature inside the case under predetermined temperature limits;
- a single coil that runs both outside and inside said inner hermetically sealed case, inside which coil runs an anti-freeze fluid, the coil being composed of inner segments (6) in which heat exchange takes place in order to cool the liquid running inside them, and outer segments (5) in which heat exchange takes place with the air outside the sealed case in order to condense the moisture in said external air;
- a container (10) of antifreeze liquid at which the coil starts, with an interposed pump (9) in charge of driving the liquid in the coil, the container (10) being provided with an inlet (11) for the closed-circuit return of the last segment of the coil;
- several thermometric devices (12) interposed in several positions of the external segments (5) of the coil, which provide information on the temperature of the liquid running in said coil; and
- associated elements external to the sealed case, such as a cold generation device driven by a motor (7) to ensure that a predetermined low temperature is maintained inside the internal sealed case, and a turbine (8) for introducing air into said case, to ensure the supply of an amount of air, whether at ambient temperature or at a somewhat higher temperature, to allow condensation of its moisture to conserve the cooling mass (4), both the cooling elements (7) and turbine (4) acting only occasionally in view of the ambient conditions detected inside the aforementioned internal sealed case.
